# EUROPEAN PATENT APPLICATION

(11) **EP 3 660 685 A1**
(43) Date of publication of application: **03.06.2020**
(21) Application number: 18839147.8
(22) Date of filing: 27.07.2018
(51) Int. Cl.: G06F 12/02

(54) **DATA PROCESSING METHOD AND DEVICE FOR UNMANNED AERIAL VEHICLE**

(30) Priority: 27.07.2017 CN 201710625587
(71) Applicant: Guangzhou Xaircraft Technology Co., Ltd., Tianhe District Guangzhou Guangdong 510000 (CN)
(72) Inventor: YU, Jiangtao, Guangdong 510000 (CN)
(74) Representative: Barker Brettell LLP
(86) International application number: PCT/CN2018/097362
(87) International publication number: WO 2019/020101

(57) **Abstract**

A data processing method and apparatus for an Unmanned Aerial Vehicle (UAV) are provided. The UAV includes a flight controller, an electronic governor and at least one voltage division component. The method includes: a voltage division voltage parameter and a power voltage parameter are collected; a voltage ratio parameter is obtained according to the voltage division voltage parameter and the power voltage parameter; a resistance ratio parameter is acquired; when the voltage ratio parameter meets a preset resistance ratio threshold range of the resistance ratio parameter, the electronic governor is addressed according to the preset resistance ratio threshold range to obtain an address of the electronic governor; and a control instruction of the flight controller is received based on the address of the electronic governor.

## Description

### Technical Field

The disclosure relates to the technical field of unmanned aerial vehicles, and more particularly to a data processing method for an Unmanned Aerial Vehicle (UAV) and a data processing apparatus for a UAV.

### Background

An Unmanned Aerial Vehicle (UAV) is an unmanned aircraft operated by a radio remote control device and a self-contained program control apparatus. UAVs are widely used in urban management, agriculture, geology, meteorology, electric power, disaster relief, video shooting and other industries. For example, UAVs may be used in agriculture to spray pesticides, fertilizers, etc. for agricultural products.

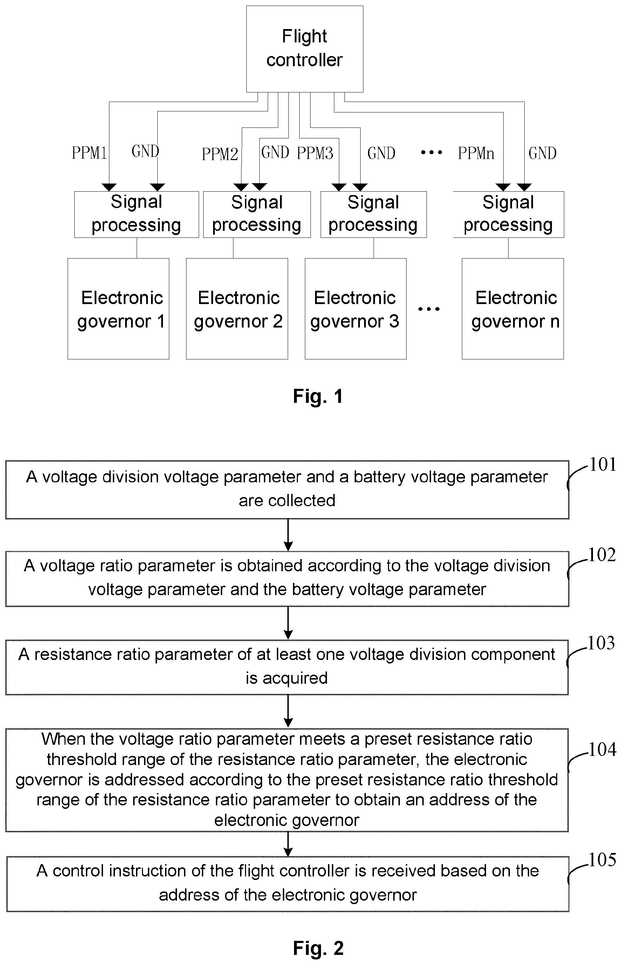

The UAV may include an electronic governor and a flight control system. The flight control system sends a control instruction to the electronic governor to complete flight control of the UAV. The type of the UAV may include a multi-rotor UAV such as a four-rotor UAV, a six-rotor UAV or an eight-rotor UAV. Fig. 1 illustrates a schematic diagram of a connection between a flight controller and an electronic governor in the related art. As shown in the figure, each electronic governor requires signal lines, digital ground lines and other connecting lines. Different multi-rotor UAVs may require at least eight, twelve and sixteen connecting lines. As there are more connecting lines, the probability of poor contact of the connecting lines will increase, the reliability of the system will be reduced, and an explosion accident may also occur. Moreover, due to the increased number of connecting lines, installation errors are likely to occur during the actual installation process, and after each installation, the connecting lines need to be checked, so the steps are cumbersome.

### Summary

The embodiments of the disclosure provide a data processing method for a UAV and a corresponding data processing apparatus for a UAV, intended to solve the above problem of system reliability degradation caused by excessive wiring between an electronic governor and a flight controller in a UAV.

In order to solve the above problem, an embodiment of the disclosure discloses a data processing method for a UAV. The UAV may include a flight controller, an electronic governor and at least one voltage division component. The flight controller may be connected to the electronic governor by means of a bus. The method may include the following steps:
a voltage division voltage parameter and a power voltage parameter are collected;
a voltage ratio parameter is obtained according to the voltage division voltage parameter and the power voltage parameter;
a resistance ratio parameter of at least one voltage division component is acquired;
when the voltage ratio parameter meets a preset resistance ratio threshold range of the resistance ratio parameter, the electronic governor is addressed according to the preset resistance ratio threshold range of the resistance ratio parameter to obtain an address of the electronic governor; and
a control instruction of the flight controller is received based on the address of the electronic governor.

Optionally, the UAV may include a governor circuit board, the electronic governor and at least one voltage division component being arranged on the governor circuit board.

Optionally, the step that a voltage ratio parameter is obtained according to the voltage division voltage parameter and the power voltage parameter may include that:
a voltage ratio parameter is obtained by performing a quotient operation on the voltage division voltage parameter and the power voltage parameter.

Optionally, at least one voltage division component may include a first voltage division component and a second voltage division component, and the step that a corresponding resistance ratio parameter of at least one voltage division component is acquired may include that:
a first resistance value corresponding to the first voltage division component and a second resistance value corresponding to the second voltage division component are determined; and
a ratio of the first resistance value to the second resistance value is determined as a resistance ratio parameter.

Optionally, the method may further include the following step:
a preset resistance ratio threshold range is determined according to the resistance ratio parameter.

Optionally, the step that a preset resistance ratio threshold range is determined according to the resistance ratio parameter may include that:
a parameter range within an upper limit value and a lower limit value of the resistance ratio parameter is extracted, and the parameter range is determined as a preset resistance ratio threshold range.

Optionally, the step that the electronic governor is addressed according to the preset resistance ratio threshold range of the resistance ratio parameter to obtain an address of the electronic governor when the voltage ratio parameter meets a preset resistance ratio threshold range of the resistance ratio parameter may include that:
a mapping relationship between the preset resistance ratio threshold range and an address of the electronic governor is established; and

when the voltage ratio parameter meets the preset resistance ratio threshold range, the electronic governor is addressed according to the mapping relationship to obtain an address of the electronic governor.

Optionally, the step that the electronic governor is addressed according to the mapping relationship to obtain an address of the electronic governor when the voltage ratio parameter meets the preset resistance ratio threshold range may include that:
the mapping relationship is queried to obtain an address according to the preset resistance ratio threshold range in which the resistance ratio parameter is located; and
a corresponding electronic governor is configured by using the address to obtain an address of the electronic governor.

Optionally, the method may further include the following step:
when the voltage ratio parameter does not meet the preset resistance ratio threshold range, an alarm is given.

An embodiment of the disclosure also discloses a data processing apparatus for a UAV. The UAV may include a flight controller, an electronic governor and at least one voltage division component. The flight controller may be connected to the electronic governor by means of a bus. The apparatus may include:
a collection component, configured to collect a voltage division voltage parameter and a power voltage parameter;
a voltage ratio parameter obtaining component, configured to obtain a voltage ratio parameter according to the voltage division voltage parameter and the power voltage parameter;
a resistance ratio parameter acquiring component, configured to acquire a resistance ratio parameter of at least one voltage division component;
an addressing component, configured to address, when the voltage ratio parameter meets a preset resistance ratio threshold range of the resistance ratio parameter, the electronic governor according to the preset resistance ratio threshold range of the resistance ratio parameter to obtain an address of the electronic governor; and
an instruction receiving component, configured to receive a control instruction of the flight controller based on the address of the electronic governor.

Optionally, the UAV may include a governor circuit board, the electronic governor and at least one voltage division component being arranged on the governor circuit board.

Optionally, the voltage ratio parameter obtaining component may include:
a voltage ratio parameter obtaining sub-component, configured to obtain a voltage ratio parameter by performing a quotient operation on the voltage division voltage parameter and the power voltage parameter.

Optionally, at least one voltage division component may include a first voltage division component and a second voltage division component, and the resistance ratio parameter acquiring component may include:
a resistance value determining sub-component, configured to determine a first resistance value corresponding to the first voltage division component and a second resistance value corresponding to the second voltage division component; and
a resistance ratio parameter determining sub-component, configured to determine a ratio of the first resistance value to the second resistance value as a resistance ratio parameter.

Optionally, the apparatus may further include:
a threshold range determining component, configured to determine a preset resistance ratio threshold range according to the resistance ratio parameter.

Optionally, the threshold range determining component may include:
a threshold range determining sub-component, configured to extract a parameter range within an upper limit value and a lower limit value of the resistance ratio parameter, and determine the parameter range as a preset resistance ratio threshold range.

Optionally, the addressing component may include:
a mapping relationship establishing sub-component, configured to establish a mapping relationship between the preset resistance ratio threshold range and an address of the electronic governor; and
an addressing sub-component, configured to address, when the voltage ratio parameter meets the preset resistance ratio threshold range, the electronic governor according to the mapping relationship to obtain an address of the electronic governor.

Optionally, the addressing sub-component may include:
a querying unit, configured to query the mapping relationship to obtain an address according to the preset resistance ratio threshold range in which the resistance ratio parameter is located; and
an address obtaining unit, configured to configure a corresponding electronic governor by using the address to obtain an address of the electronic governor.

Optionally, the apparatus may further include:
an alarm component, configured to give, when the voltage ratio parameter does not meet the preset resistance ratio threshold range, an alarm.

An embodiment of the disclosure also discloses a UAV, which may connect a flight controller and an electronic governor by means of a bus. The UAV may further include the data processing apparatus according to any one of the above.

An embodiment of the disclosure also discloses a storage medium, which may include a stored program, where when the program is run, a device where the storage medium is located may be controlled to perform the data processing method for a UAV according to any one of the above.

An embodiment of the disclosure also discloses a processor, which may be configured to run a program, where the program is run to perform the data processing method for a UAV according to any one of the above.

The embodiments of the disclosure include the following advantages.

In the embodiments of the disclosure, the flight controller is connected to the electronic governor by means of a bus, and collects a voltage division voltage parameter and a battery voltage parameter; a voltage ratio parameter is obtained according to the voltage division voltage parameter and the battery voltage parameter; a resistance ratio parameter of the voltage division component is acquired; when the voltage ratio parameter meets a preset resistance ratio threshold range of the resistance ratio parameter, the electronic governor is addressed according to the preset resistance ratio threshold range of the resistance ratio parameter to obtain an address of the electronic governor; and a control instruction of the flight controller is received based on the address of the electronic governor. In the embodiments of the disclosure, a bus connection manner is adopted between the flight controller and the electronic governor, so that connecting lines between the flight controller and the electronic governor are reduced, the probability of poor contact of the connecting lines is reduced, and the reliability of a flight control system is improved. In the bus mode, the electronic governor needs to be addressed one by one, and the address static allocation is required, which may be implemented by using a dial switch or a short-connected piece. In the embodiments of the disclosure, the address of the electronic governor is determined by configuring a resistance ratio parameter ratio of the voltage division component on the governor circuit board, and the voltage division component is disposed on the governor circuit board. Each electronic governor is disassembled, the electronic governor is plug-and-play without manual configuration, the voltage division component is separated from the electronic governor or the flight controller, and both are not required to be configured. By using a ratio value manner, the address of the electronic governor may also be accurately determined when the input battery power is changed.

### Brief Description of the Drawings

In order to describe the technical solutions in the embodiments of the disclosure more clearly, the drawings required by describing the embodiments will be briefly introduced below. It is apparent that the drawings described below are only some embodiments of the disclosure. Those of ordinary skill in the art may also obtain other drawings according to these drawings without creative work.
Fig. 1 is a schematic diagram of a connection between a flight controller and an electronic governor in the conventional art;
Fig. 2 is a step flowchart of an embodiment 1 of a data processing method for a UAV according to an embodiment of the disclosure;
Fig. 3 is a schematic diagram of a connection between a flight controller and an electronic governor according to an embodiment of the disclosure;
Fig. 4 is a step flowchart of an embodiment 2 of a data processing method for a UAV according to an embodiment of the disclosure; and
Fig. 5 is a structural block diagram of an embodiment of a data processing apparatus for a UAV according to an embodiment of the disclosure.

### Detailed Description of the Embodiments

In order to make the technical problems to be solved, technical solutions and beneficial effects of the embodiments of the disclosure clearer, the embodiments of the disclosure will be further elaborated below in conjunction with the drawings and the embodiments. It will be appreciated that specific embodiments described here are only used to explain the disclosure, not to limit the disclosure.

Fig. 2 illustrates a step flowchart of an embodiment 1 of a data processing method for a UAV according to an embodiment of the disclosure. The UAV includes a flight controller, an electronic governor and at least one voltage division component. The flight controller is connected to the electronic governor by means of a bus. The method may specifically include the following steps.

In step 101, a voltage division voltage parameter and a battery voltage parameter are collected.

In the embodiments of the disclosure, the UAV may be a multi-rotor UAV. The UAV may include a flight controller, an electronic governor and at least one voltage division component, and may further include a battery, a blade, a rack, a communication component and the like, which are not specifically limited in the embodiments of the disclosure. The UAV may further include a governor circuit board, and the electronic governor and at least one voltage division component are respectively arranged on the governor circuit board. The number of the electronic governor and at least one voltage division component may be plural, which is not limited in the embodiments of the disclosure.

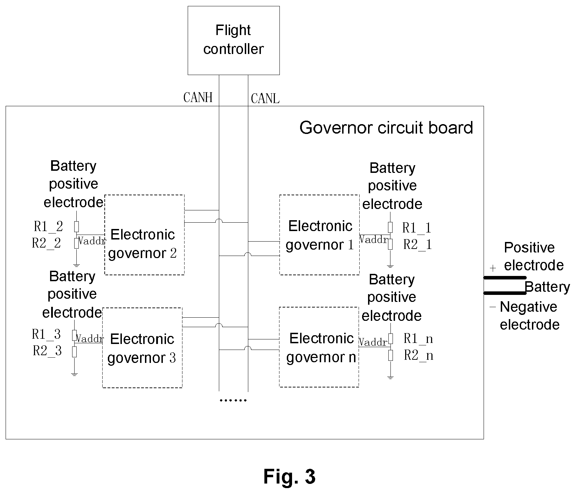

Fig. 3 illustrates a schematic diagram of a connection between a flight controller and an electronic governor according to an embodiment of the disclosure. As shown in the figure, in a flight control system of the UAV, the flight controller is connected to multiple electronic governors by means of a bus. Specifically, the flight controller may be connected to each electronic governor on a CAN bus through two differential CANHs and CANLs of the CAN bus. Optionally, the bus may also include a bus such as RS-485 and RS-422, which is not limited in the embodiments of the disclosure.

Optionally, the electronic governor and at least one voltage division component are arranged on the governor circuit board, and at least one voltage division component may include a first voltage division component and a second voltage division component, namely R1_1 and R2_1 as shown in the figure. The first voltage division component and the second voltage division component are connected beside each governor to form a voltage division circuit. The first voltage division component and the second voltage division component are respectively connected to positive and negative electrodes of a battery. A voltage division point is connected to the electronic governor.

In the embodiments of the disclosure, after the battery is powered on, a single-chip microcomputer is delayed by 100ms, and a voltage division voltage parameter of at least one voltage division component and a voltage parameter of a power supply namely a power voltage parameter are collected simultaneously. In order to reduce a sampling error, the parameters may be continuously collected for multiple times, such as 300. The embodiments of the disclosure do not limit this.

In step 102, a voltage ratio parameter is obtained according to the voltage division voltage parameter and the battery voltage parameter.

Optionally, after collecting the voltage division voltage parameter of at least one voltage division component and the power voltage parameter, a voltage ratio parameter may be obtained according to the voltage division voltage parameter and the battery voltage parameter. Specifically, a voltage ratio parameter is obtained by performing a quotient operation on the voltage division voltage parameter and the battery voltage parameter.

In step 103, a resistance ratio parameter of at least one voltage division component is acquired.

In the practical application to the embodiments of the disclosure, a resistance ratio parameter of at least one voltage division component may be acquired, that is, a ratio between resistance values of the first voltage division component and the second voltage division component, such as a ratio between resistance values of R1_1 and R2_1, is determined. The resistance ratio parameters of voltage division components connected to multiple electronic governors are respectively acquired.

In step 104, when the voltage ratio parameter meets a preset resistance ratio threshold range of the resistance ratio parameter, the electronic governor is addressed according to the preset resistance ratio threshold range of the resistance ratio parameter to obtain an address of the electronic governor.

Specifically, in the embodiments of the disclosure, it is further judged whether the voltage ratio parameter meets a preset resistance ratio threshold range, and when the voltage ratio parameter meets the preset resistance ratio threshold range obtained according to the voltage ratio parameter, according to a mapping relationship between the preset resistance ratio threshold range and the address of the electronic governor, the mapping relationship is queried to acquire an address, then the corresponding electronic governor is configured with the address to obtain an address of the electronic governor, and the addressing of the corresponding electronic governor is completed.

If the voltage ratio parameter does not meet the preset resistance ratio threshold range, there may be an error in the hardware installation process or the wiring process. At this time, the UAV gives an alarm.

It should be noted that the preset resistance ratio threshold range may be determined according to the resistance ratio parameter, that is, the preset resistance ratio threshold range is a range of values determined according to the resistance ratio parameter. For example, by centering on the resistance ratio parameter, a parameter range of an upper limit value and a lower limit value of the resistance ratio parameter is extracted, and the parameter range is determined as the preset resistance ratio threshold range, where the upper limit value and the lower limit value may be any value set based on actual conditions by those skilled in the art, such as ±0.006, which is not specifically limited in the embodiments of the disclosure.

In step 105, a control instruction of the flight controller is received based on the address of the electronic governor.

In the embodiments of the disclosure, after the addressing of the electronic governor is completed, the electronic governor may receive a control instruction of the flight controller based on the corresponding address, and adjust the speed or flight attitude of the UAV.

In the embodiments of the disclosure, the flight controller is connected to the electronic governor by means of a bus, and collects a voltage division voltage parameter and a battery voltage parameter; a voltage ratio parameter is obtained according to the voltage division voltage parameter and the battery voltage parameter; a resistance ratio parameter of at least one voltage division component is acquired; when the voltage ratio parameter meets a preset resistance ratio threshold range of the resistance ratio parameter, the electronic governor is addressed according to the preset resistance ratio threshold range of the resistance ratio parameter to obtain an address of the electronic governor; and a control instruction of the flight controller is received based on the address of the electronic governor. In the embodiments of the disclosure, a bus connection manner is adopted between the flight controller and the electronic governor, so that connecting lines between the flight controller and the electronic governor are reduced, the probability of poor contact of the connecting lines is reduced, and the reliability of a flight control system is improved. The address of the electronic governor is determined by configuring a resistance ratio parameter ratio of at least one voltage division component on the governor circuit board, and the address of the electronic governor may also be accurately determined when the input battery power is changed.

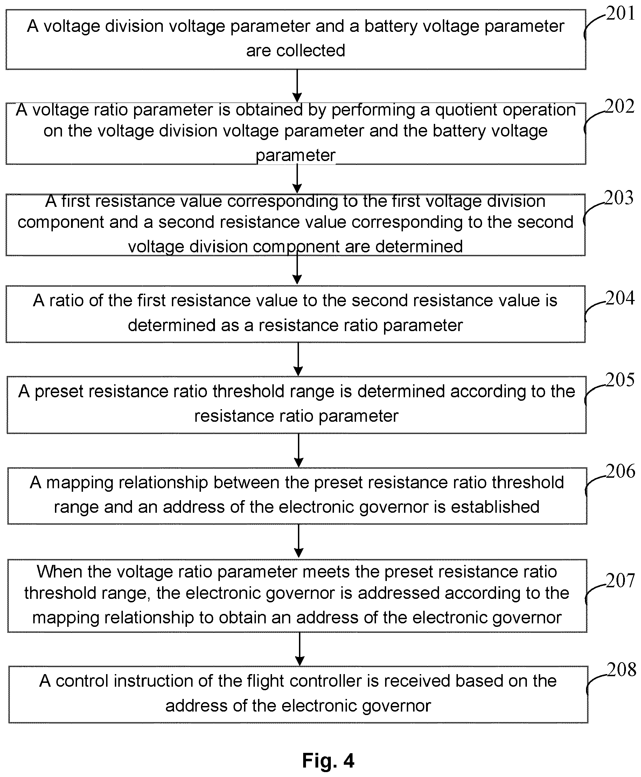

Fig. 4 illustrates a step flowchart of an embodiment 2 of a data processing method for a UAV according to an embodiment of the disclosure. The UAV includes a flight controller, an electronic governor and at least one voltage division component. The flight controller is connected to the electronic governor by means of a bus. The method may specifically include the following steps.

In step 201, a voltage division voltage parameter and a battery voltage parameter are collected.

In the embodiments of the disclosure, after a battery of the UAV is powered on and a single-chip microcomputer is delayed, a battery voltage parameter (PVDD, Power Voltage Device) and a voltage division voltage parameter Vaddr of an addressing circuit are separately collected, and may be continuously collected for multiple times. An average value is calculated to reduce the sampling error of the voltage division voltage parameter and the battery voltage parameter.

In step 202, a voltage ratio parameter is obtained by performing a quotient operation on the voltage division voltage parameter and the battery voltage parameter.

Optionally, after collecting the voltage division voltage parameter of at least one voltage division component and the power voltage parameter, a voltage ratio parameter may be obtained according to the voltage division voltage parameter and the battery voltage parameter. For example, if the battery voltage parameter is 49V and the voltage division voltage parameter is 0.24V, the voltage ratio parameter is 0.24V/49V, that is, 0.0049.

In step 203, a first resistance value corresponding to the first voltage division component and a second resistance value corresponding to the second voltage division component are determined.

Specifically, in the embodiments of the disclosure, at least one voltage division component includes a first voltage division component and a second voltage division component, and a first resistance value corresponding to the first voltage division component and a second resistance value corresponding to the second voltage division component are determined. It should be noted that the first voltage division component and the second voltage division component are voltage division components arranged in the corresponding electronic governor. For example, R1_n and R2_n in Fig. 3 are arranged beside an electronic governor n.

In step 204, a ratio of the first resistance value to the second resistance value is determined as a resistance ratio parameter.

In practical applications, a ratio of the first resistance value to the second resistance value may be determined as a resistance ratio parameter. For example, if the first resistance value R1_n is 40kohm (kilo ohm), and the second resistance value R2_n is 1kohm, the resistance ratio parameter is 1kohm/(40+1)kohm, which is 0.02439.

In step 205, a preset resistance ratio threshold range is determined according to the resistance ratio parameter.

Optionally, the preset resistance ratio threshold range may be determined according to the obtained resistance ratio parameter. Specifically, a parameter range within an upper limit value and a lower limit value of the resistance ratio parameter may be extracted, and the parameter range is determined as the preset resistance ratio threshold range, where the upper limit value and the lower limit value may be any value set based on actual conditions by those skilled in the art, which is not specifically limited in the embodiments of the disclosure. That is, step 205 may include the following sub-steps.

In sub-step S2051, a parameter range within an upper limit value and a lower limit value of the resistance ratio parameter is extracted, and the parameter range is determined as a preset resistance ratio threshold range.

Specifically, in the embodiments of the disclosure, a parameter range within an upper limit value and a lower limit value is extracted with the resistance ratio parameter as a center, and the parameter range is determined as the preset resistance ratio threshold range. For example, if the upper limit value and the lower limit value are ±0.006, the upper limit value is increased and the lower limit value is decreased based on the resistance ratio parameter to obtain the preset resistance ratio threshold range. If the resistance ratio parameter is 0.02439, 0.02439 is added with 0.006 to obtain a first endpoint value, and 0.006 is subtracted from 0.02439 to obtain a second endpoint value, that is, the preset resistance ratio threshold range is 0.01839 to 0.3039.

In step 206, a mapping relationship between the preset resistance ratio threshold range and an address of the electronic governor is established.

In the embodiments of the disclosure, a mapping relationship between the preset resistance ratio threshold range and the address of the electronic governor may be established in advance. For example, an address of an electronic governor connected to R1_1 and R2_1 in Fig. 3 is set to an electronic governor 1, a resistance value of R1_1 is 200kohm, a resistance value of R2_1 is 2kohm, and a corresponding preset resistance ratio threshold range may be 0.0099±0.006. An address of an electronic governor connected to R1_2 and R2_2 in Fig. 3 is set to an electronic governor 2, a resistance value of R1_2 is 40kohm, a resistance value of R2_2 is 1kohm, and a corresponding preset resistance ratio threshold range may be 0.02439±0.006. The resistance value of each voltage division component may be different values set by those skilled in the art according to the actual situation, which is not limited in the embodiments of the disclosure. The resistance ratio parameter is determined by the resistance value of at least one voltage division component, and the preset resistance ratio threshold range is calculated according to the resistance ratio parameter. In this way, the mapping relationship between the preset resistance ratio threshold range and the address of the electronic governor is established, and it should be noted that multiple preset resistance ratio threshold ranges may not have overlapping parameter ranges.

In step 207, when the voltage ratio parameter meets the preset resistance ratio threshold range, the electronic governor is addressed according to the mapping relationship to obtain an address of the electronic governor.

Specifically, it may be further judged whether the voltage ratio parameter meets the preset resistance ratio threshold range, and when the voltage ratio parameter meets the preset resistance ratio threshold range, the electronic governor is addressed according to the mapping relationship to obtain an address of the electronic governor.

In a preferred embodiment of the embodiments of the disclosure, the step that the electronic governor is addressed according to the mapping relationship to obtain an address of the electronic governor when the voltage ratio parameter meets the preset resistance ratio threshold range may include the following sub-steps.

In sub-step S2071, the mapping relationship is queried to obtain an address according to the preset resistance ratio threshold range in which the resistance ratio parameter is located.

In sub-step S2072, a corresponding electronic governor is configured by using the address to obtain an address of the electronic governor.

In the embodiments of the disclosure, when the voltage ratio parameter meets the preset resistance ratio threshold range, the mapping relationship is queried to obtain an address according to the preset resistance ratio threshold range in which the resistance ratio parameter is located, and then the corresponding electronic governor is configured with the address to complete addressing of the electronic governor.

For example, when the voltage ratio parameter is 0.0251, the preset resistance ratio threshold range is 0.02439±0.006, that is, 0.01839-0.3039, and the voltage ratio parameter meets the preset resistance ratio threshold range, so an address corresponding to the electronic governor is obtained according to the mapping relationship between the preset resistance ratio threshold range and the address of the electronic governor, that is, the address of the electronic regulator is configured as the electronic governor 2.

In step 208, a control instruction of the flight controller is received based on the address of the electronic governor.

In the embodiments of the disclosure, after the addressing of the electronic governor is completed, the electronic governor may receive a control instruction of the flight controller based on the corresponding address, and adjust the speed or flight attitude of the UAV.

In the embodiments of the disclosure, a voltage division voltage parameter and a battery voltage parameter are collected; a voltage ratio parameter is obtained by performing a quotient operation on the voltage division voltage parameter and the battery voltage parameter; a first resistance value corresponding to the first voltage division component and a second resistance value corresponding to the second voltage division component are determined; a ratio of the first resistance value to the second resistance value is determined as a resistance ratio parameter; a preset resistance ratio threshold range is determined according to the resistance ratio parameter; a mapping relationship between the preset resistance ratio threshold range and an address of the electronic governor is established; when the voltage ratio parameter meets the preset resistance ratio threshold range, the electronic governor is addressed according to the mapping relationship to obtain an address of the electronic governor; and a control instruction of the flight controller is received based on the address of the electronic governor. In the embodiments of the disclosure, a bus connection manner is adopted between the flight controller and the electronic governor, so that there are only two connecting lines between the flight controller and the electronic governor, the number of the connecting lines may be reduced, the probability of poor contact of the connecting lines is reduced, the anti-interference of a signal is improved, and the reliability of a flight control system is improved. There is no need to change the configuration of the flight controller and the electronic governor. Static address allocation is adopted. By presetting the resistance value of at least one voltage division component on the governor circuit board, the address of the electronic governor in the bus is determined according to the ratio of the resistance value. The address of the electronic governor may also be accurately determined when the input battery power is changed. The technical effect that the electronic governor is plug-and-play is achieved.

It is to be noted that, for the method embodiments, for the sake of simple description, they are all expressed as a series of action combinations, but those skilled in the art should understand that the embodiments of the disclosure are not limited by the described action sequence, because certain steps may be performed in other sequences or concurrently in accordance with the embodiments of the disclosure. In the following, those skilled in the art should also understand that the embodiments described in the specification are all preferred embodiments, and the actions involved are not necessarily required in the embodiments of the disclosure.

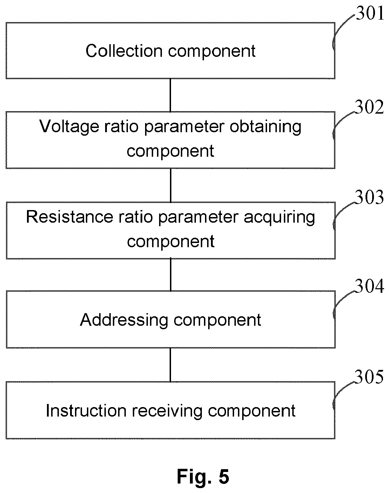

Fig. 5 illustrates a structural block diagram of an embodiment of a data processing apparatus for a UAV according to an embodiment of the disclosure. The UAV includes a flight controller, an electronic governor and at least one voltage division component. The flight controller is connected to the electronic governor by means of a bus. The method may specifically include the following components:
a collection component 301, configured to collect a voltage division voltage parameter and a battery voltage parameter;
a voltage ratio parameter obtaining component 302, configured to obtain a voltage ratio parameter according to the voltage division voltage parameter and the battery voltage parameter;
a resistance ratio parameter acquiring component 303, configured to acquire a resistance ratio parameter of at least one voltage division component;
an addressing component 304, configured to address, when the voltage ratio parameter meets a preset resistance ratio threshold range of the resistance ratio parameter, the electronic governor according to the preset resistance ratio threshold range of the resistance ratio parameter to obtain an address of the electronic governor; and
an instruction receiving component 305, configured to receive a control instruction of the flight controller based on the address of the electronic governor.

Optionally, the UAV includes a governor circuit board, the electronic governor and at least one voltage division component being arranged on the governor circuit board.

Optionally, the voltage ratio parameter obtaining component 302 includes:
a voltage ratio parameter obtaining sub-component, configured to obtain a voltage ratio parameter by performing a quotient operation on the voltage division voltage parameter and the battery voltage parameter.

Optionally, at least one voltage division component includes a first voltage division component and a second voltage division component, and the resistance ratio parameter acquiring component 303 includes:
a resistance value determining sub-component, configured to determine a first resistance value corresponding to the first voltage division component and a second resistance value corresponding to the second voltage division component; and
a resistance ratio parameter determining sub-component, configured to determine a ratio of the first resistance value to the second resistance value as a resistance ratio parameter.

Optionally, the apparatus further includes:
a threshold range determining component 306, configured to determine a preset resistance ratio threshold range according to the resistance ratio parameter.

Optionally, the threshold range determining component 306 includes:
a threshold range determining sub-component, configured to extract a parameter range within an upper limit value and a lower limit value of the resistance ratio parameter, and determine the parameter range as a preset resistance ratio threshold range.

Optionally, the addressing component 304 includes:
a mapping relationship establishing sub-component, configured to establish a mapping relationship between the preset resistance ratio threshold range and an address of the electronic governor; and
an addressing sub-component, configured to address, when the voltage ratio parameter meets the preset resistance ratio threshold range, the electronic governor according to the mapping relationship to obtain an address of the electronic governor.

Optionally, the addressing sub-component includes:
a querying unit, configured to query the mapping relationship to obtain an address according to the preset resistance ratio threshold range in which the resistance ratio parameter is located; and
an address obtaining unit, configured to configure a corresponding electronic governor by using the address to obtain an address of the electronic governor.

Optionally, the apparatus further includes:
an alarm component, configured to give, when the voltage ratio parameter does not meet the preset resistance ratio threshold range, an alarm.

An embodiment of the disclosure also provides a UAV, which may connect a flight controller and an electronic governor by means of a bus. The UAV may further include the data processing apparatus according to the embodiment of the disclosure.

An embodiment of the disclosure also provides a storage medium, which includes a stored program, where when the program is run, a device where the storage medium is located is controlled to perform the data processing method for a UAV according to the embodiment of the disclosure.

An embodiment of the disclosure also provides a processor, which is configured to run a program, where the program is run to perform the data processing method for a UAV according to the embodiment of the disclosure.

For the device embodiment, since it is basically similar to the method embodiment, the description is relatively simple, and the relevant parts can be referred to the description of the method embodiment.

Various embodiments in the present specification are described in a progressive manner, each embodiment focuses on differences from other embodiments, and the identical or similar parts between the various embodiments can be referred to each other.

A person skilled in the art should understand that the embodiments of the disclosure may be provided as a method, a device or a computer program product. Thus, the embodiments of the disclosure may adopt forms of complete hardware embodiments, complete software embodiments or embodiments integrating software and hardware. Moreover, the embodiments of the disclosure may adopt the form of a computer program product implemented on one or more computer available storage media (including, but not limited to, a disk memory, a CD-ROM, an optical memory and the like) containing computer available program codes.

The embodiments of the disclosure are described with reference to flowcharts and/or block diagrams of the method, the terminal device (system) and the computer program product according to the embodiments of the disclosure. It is to be understood that each flow and/or block in the flowcharts and/or the block diagrams and a combination of the flows and/or the blocks in the flowcharts and/or the block diagrams may be implemented by computer program instructions. These computer program instructions may be provided for a general computer, a dedicated computer, an embedded processor or processors of other programmable data processing terminal devices to generate a machine, so that an apparatus for achieving functions designated in one or more flows of the flowcharts and/or one or more blocks of the block diagrams is generated via instructions executed by the computers or the processors of the other programmable data processing terminal devices.

These computer program instructions may also be stored in a computer readable memory capable of guiding the computers or the other programmable data processing terminal devices to work in a specific mode, so that a manufactured product including an instruction apparatus is generated via the instructions stored in the computer readable memory, and the instruction apparatus achieves the functions designated in one or more flows of the flowcharts and/or one or more blocks of the block diagrams.

These computer program instructions may also be loaded to the computers or the other programmable data processing terminal devices, so that processing implemented by the computers is generated by executing a series of operation steps on the computers or the other programmable terminal devices, and therefore the instructions executed on the computers or the other programmable terminal devices provide a step of achieving the functions designated in one or more flows of the flowcharts and/or one or more blocks of the block diagrams.

While preferred embodiments of the embodiments of the disclosure have been described, those skilled in the art can make additional changes and modifications to the embodiments once knowing a basic creativity concept. Therefore, the appended claims are intended to be interpreted as including the preferred embodiments and all the changes and modifications falling within the scope of the embodiments of the disclosure.

Finally, it is also to be noted that relational terms such as first and second are used merely to distinguish one entity or operation from another entity or operation herein, and do not necessarily require or imply the existence of any such actual relationship or order between these entities or operations. Moreover, the terms "include", "contain" or any other variations thereof are intended to cover a non-exclusive inclusion, such that a process, method, article or terminal device including a series of elements not only includes those elements, but also includes those elements that are not explicitly listed, or includes elements inherent to such a process, method, article or terminal device. Under the condition of no more limitations, it is not excluded that additional identical elements exist in the process, method, article or terminal device including elements defined by a sentence "including a ...".

The above is a detailed description of a method and an apparatus provided by the disclosure. The principle and implementation manner of the disclosure are described in the specific examples herein. The description of the embodiments is only for helping to understand the method of the disclosure and its core ideas. Furthermore, for those of ordinary skill in the art, according to the idea of the disclosure, there will be changes in specific implementation manners and disclosure scopes. In conclusion, the above description should not be taken as limiting the disclosure.

### Industrial Applicability

The solution provided by the embodiments of the disclosure may be applied to data processing for a UAV. In the embodiments of the disclosure, a bus connection manner is adopted between the flight controller and the electronic governor, so that connecting lines between the flight controller and the electronic governor are reduced, the probability of poor contact of the connecting lines is reduced, and the reliability of a flight control system is improved. In the bus mode, the electronic governor needs to be addressed one by one, and the address static allocation is required, which may be implemented by using a dial switch or a short-connected piece. In the embodiments of the disclosure, the address of the electronic governor is determined by configuring a resistance ratio parameter ratio of at least one voltage division component on the governor circuit board, and at least one voltage division component is disposed on the governor circuit board. Each electronic governor is disassembled, the electronic governor is plug-and-play without manual configuration, at least one voltage division component is separated from the electronic governor or the flight controller, and both are not required to be configured. By using a ratio value manner, the address of the electronic governor may also be accurately determined when the input battery power is changed.

## Claims

1. A data processing method for an Unmanned Aerial Vehicle (UAV), the UAV comprising a flight controller, an electronic governor and at least one voltage division component, the flight controller being connected to the electronic governor by a bus, the method comprising:
collecting a voltage division voltage parameter of at least one voltage division component and a power voltage parameter;
obtaining a voltage ratio parameter according to the voltage division voltage parameter and the power voltage parameter;
acquiring a resistance ratio parameter of at least one voltage division component;
when the voltage ratio parameter meets a preset resistance ratio threshold range of the resistance ratio parameter, addressing the electronic governor according to the preset resistance ratio threshold range of the resistance ratio parameter to obtain an address of the electronic governor; and
receiving a control instruction of the flight controller based on the address of the electronic governor.

2. The method as claimed in claim 1, wherein the UAV comprises a governor circuit board, the electronic governor and at least one voltage division component are arranged on the governor circuit board.

3. The method as claimed in claim 1, wherein obtaining the voltage ratio parameter according to the voltage division voltage parameter and the power voltage parameter comprises:
obtaining the voltage ratio parameter by performing a quotient operation on the voltage division voltage parameter and the power voltage parameter.

4. The method as claimed in claim 1, wherein at least one voltage division component comprises a first voltage division component and a second voltage division component, and acquiring the resistance ratio parameter of at least one voltage division component comprises:
determining a first resistance value corresponding to the first voltage division component and a second resistance value corresponding to the second voltage division component; and
determining a ratio of the first resistance value to the second resistance value as the resistance ratio parameter.

5. The method as claimed in claim 1, further comprising:
determining the preset resistance ratio threshold range according to the resistance ratio parameter;
wherein determining the preset resistance ratio threshold range according to the resistance ratio parameter comprises: extracting a parameter range within an upper limit value and a lower limit value of the resistance ratio parameter, and determining the parameter range as the preset resistance ratio threshold range.

6. The method as claimed in claim 1, wherein addressing, when the voltage ratio parameter meets the preset resistance ratio threshold range of the resistance ratio parameter, the electronic governor according to the preset resistance ratio threshold range of the resistance ratio parameter to obtain the address of the electronic governor comprises:
establishing a mapping relationship between the preset resistance ratio threshold range and the address of the electronic governor; and
when the voltage ratio parameter meets the preset resistance ratio threshold range, addressing the electronic governor according to the mapping relationship to obtain the address of the electronic governor.

7. The method as claimed in claim 1 or 7, wherein addressing, when the voltage ratio parameter meets the preset resistance ratio threshold range, the electronic governor according to the mapping relationship to obtain the address of the electronic governor comprises:
querying the mapping relationship to obtain an address according to the preset resistance ratio threshold range in which the resistance ratio parameter is located; and
configuring a corresponding electronic governor by using the address to obtain the address of the electronic governor.

8. The method as claimed in claim 1, further comprising:
when the voltage ratio parameter does not meet the preset resistance ratio threshold range, giving an alarm.

9. A data processing apparatus for an Unmanned Aerial Vehicle (UAV), the UAV comprising a flight controller, an electronic governor and at least one voltage division component, the flight controller is connected to the electronic governor by a bus, the apparatus comprising:
a collection component, configured to collect a voltage division voltage parameter and a power voltage parameter;
a voltage ratio parameter obtaining component, configured to obtain a voltage ratio parameter according to the voltage division voltage parameter and the power voltage parameter;
a resistance ratio parameter acquiring component, configured to acquire a resistance ratio parameter of at least one voltage division component;
an addressing component, configured to address, when the voltage ratio parameter meets a preset resistance ratio threshold range of the resistance ratio parameter, the electronic governor according to the preset resistance ratio threshold range of the resistance ratio parameter to obtain an address of the electronic governor; and
an instruction receiving component, configured to receive a control instruction of the flight controller based on the address of the electronic governor.

10. The apparatus as claimed in claim 9, wherein the UAV comprises a governor circuit board, the electronic governor and at least one voltage division component are arranged on the governor circuit board.

11. The apparatus as claimed in claim 9, wherein the voltage ratio parameter obtaining component comprises:
a voltage ratio parameter obtaining sub-component, configured to obtain the voltage ratio parameter by performing a quotient operation on the voltage division voltage parameter and the power voltage parameter.

12. The apparatus as claimed in claim 9, wherein at least one voltage division component comprises a first voltage division component and a second voltage division component, and the resistance ratio parameter acquiring component comprises:
a resistance value determining sub-component, configured to determine a first resistance value corresponding to the first voltage division component and a second resistance value corresponding to the second voltage division component; and
a resistance ratio parameter determining sub-component, configured to determine a ratio of the first resistance value to the second resistance value as the resistance ratio parameter.

13. The apparatus as claimed in claim 9, further comprising:
a threshold range determining component, configured to determine the preset resistance ratio threshold range according to the resistance ratio parameter;
wherein the threshold range determining component comprises:
a threshold range determining sub-component, configured to extract a parameter range within an upper limit value and a lower limit value of the resistance ratio parameter, and determine the parameter range as the preset resistance ratio threshold range.

14. The apparatus as claimed in claim 9, wherein the addressing component comprises:
a mapping relationship establishing sub-component, configured to establish a mapping relationship between the preset resistance ratio threshold range and the address of the electronic governor; and
an addressing sub-component, configured to address, when the voltage ratio parameter meets the preset resistance ratio threshold range, the electronic governor according to the mapping relationship to obtain the address of the electronic governor.

15. The apparatus as claimed in claim 14, wherein the addressing sub-component comprises:
a querying unit, configured to query the mapping relationship to obtain an address according to the preset resistance ratio threshold range in which the resistance ratio parameter is located; and
an address obtaining unit, configured to configure a corresponding electronic governor by using the address to obtain the address of the electronic governor.
